Europäisches Patentamt

European Patent Office

Office européen des brevets

(11) Veröffentlichungsnummer: **0 229 196**
**B1**

(12) **EUROPÄISCHE PATENTSCHRIFT**

(45) Veröffentlichungstag der Patentschrift:
**17.11.88**

(21) Anmeldenummer: **85116020.0**

(22) Anmeldetag: **16.12.85**

(51) Int. Cl.⁴: **D 21 D 3/00,** D 21 F 13/06,
B 60 R 7/04

(54) Verfahren und Vorrichtung zur Herstellung eines Mehrlagen-Fasermaterials, insbesondere Pappe.

(43) Veröffentlichungstag der Anmeldung:
**22.07.87 Patentblatt 87/30**

(45) Bekanntmachung des Hinweises auf die Patenterteilung:
**17.11.88 Patentblatt 88/46**

(84) Benannte Vertragsstaaten:
**AT BE CH DE FR GB IT LI LU NL SE**

(56) Entgegenhaltungen:
**DE - C - 68 521
DE - C - 357 942
FR - A - 2 421 987
GB - A - 664 239
US - A - 2 093 347**

(73) Patentinhaber: **Feinpappenwerk Gebr. Schuster GmbH
& Co. KG, Schleissheimerstrasse 100, D-8060 Dachau
(DE)**

(72) Erfinder: **Schuster, Maximilian,
Schleissheimerstrasse 94, D-8060 Dachau (DE)**

(74) Vertreter: **Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel
Postfach 860820, D-8000 München 86 (DE)**

ACTORUM AG

## Beschreibung

Die Erfindung betrifft ein Verfahren nach dem Oberbegriff des Anspruchs 1.

Üblicherweise wird bisher beim Herstellen von Wickelpappe aus einer Faseraufschwemmung, z.B. Altpapier-Faseraufschwemmung, mit Hilfe eines endlosen Filzbandes eine lose zusammenhängende Faserbahn entnommen in Form von am Filzband lose anhaftenden Fasern. Diese Faserbahn wird auf eine Formatwalze mehrlagig aufgewickelt (z.B. 20-lagig). Die sich ergebende, die Formatwalze umschliessende Wickelpappenbahn wird längs einer Mantellinie aufgeschnitten und dann in Form eines Rechteckbogens von der Walze abgenommen und weiterverarbeitet. Üblicherweise wird der Faseraufschwemmung ein Zusatzmittel zugefügt, welches mit den Fasern in die Wickelpappenbahn gelangt, um für den Zusammenhalt der Fasern der Wickelpappenbahn zu sorgen. Durch entsprechende Wahl des Zusatzmittels lassen sich viele Eigenschaften der Pappe, insbesondere Steifigkeit, Elastizität, Hitzebeständigkeit und Heizpressverformbarkeit, steuern. Nachteilig an diesem üblichen Verfahren ist vor allem die praktisch unvermeidliche Abwasserbelastung durch die in der Aufschwemmflüssigkeit (in der Regel Wasser) zurückbleibenden Zusatzmittelanteile, abgesehen vom erhöhten Verbrauch des Zusatzmittels. Auch verringert sich die Standzeit des endlosen Filzbandes aufgrund der Benetzung des Filzbandes durch das Zusatzmittels (Verkleben des Filzbandes). Aufgrund neuerer Abwasserbestimmungen ist der Einsatz von in Bezug auf das Endprodukt Wickelpappe besonders vorteilhaften Zusatzmitteln, wie z.B. von Phenolharzen, bei dem bisher üblichen Verfahren von vorneherein ausgeschlossen.

Aus der FR-A-24 21 987 ist es an sich bekannt, Wickelpappe dadurch flammenhemmend zu imprägnieren, dass die Formatwalze während des Aufwickelns mit dem Imprägnierungsmittel besprüht wird. Als nachteilig hat sich bei diesem bekannten Verfahren herausgestellt, dass der für die gewünschten Eigenschaften des Endprodukts in vielen Fällen sehr wesentliche Gleichmässige Auftrag des Zusatzmittels nicht sichergestellt ist. Auch eignet sich dieses Verfahren nicht für zähe Zusatzmittel. Man könnte zwar zähe Zusatzmittel durch entsprechende Verdünnung (z.B. Zugabe von Wasser oder Zugabe von Lösungsmittel) dünnflüssiger machen, das Wasser bzw. das Lösungsmittel müssen aber dann nachfolgend wieder entfernt werden mit entsprechendem Energieaufwand (zur Trocknung) bzw. mit Umweltbelastung (Lösungsmitteldämpfe). Auch können störende Sprühdämpfe bzw. Sprühnebel entstehen.

Aus der DE-C-68 521 aus dem Jahre 1893 ist es zum Anfärben von Pappen bekannt, einen Färbekasten dicht an die Formatwalze heranzurücken, so dass von den aufgewickelten Faserbahnen mehr oder weniger viel Farbflüssigkeit mitgenommen wird. Ein gleichmässiger Flüssigkeitsauftrag scheint hier nur bedingt möglich, da dieser vom jeweiligen Pegelstand der Farbflüssigkeit sowie von Dicke und Struktur des aufnehmenden Faserbahnabschnitts abhängt.

Die DE-A-32 24 430 befasst sich damit, wie aus zwei Papierbahnen eine zweilagige Papierbahn hergestellt werden kann, nämlich durch Verkleben der beiden Bahnen. Diese vorfabrizierten, mehr oder weniger reissfesten Papierbahnen bestehen aus Fasern mit gegenseitigem Zusammenhalt, wohingegen die Erfindung eine andere Verarbeitungsstufe betrifft, nämlich diejenige, bei der die Fasern einer Faseraufschwemmung unter Bildung eine lose zusammenhängenden Faserbahn entnommen werden und dann diese Faserbahn auf eine Formatwalze aufgewickelt wird, wobei durch Zugabe des Zusatzmittels die sich ergebende Wickelpappenbahn reissfest gemacht wird. Auch die Zeitschrift „Plastverarbeiter", 28. Jahrgang, 1977, Nr. 7, Seiten 345-350, befasst sich ausschliesslich damit, wie vorgefertigte, in sich zusammenhängende, bahnförmige Materialen miteinander kaschiert werden können. Auch die GB-A-664 239 beschreibt das Aufrollen von Zusatzmittel, beispielsweise Kunstharz, auf eine zusammenhängende, zugfeste Papierbahn; entsprechendes gilt für die US-A-2 093 347. Eine Anregung im Hinblick darauf, wie aus einer Faseraufschwemmung stammende, lose zusammenhängende Fasern miteinander gleichmässig zu verkleben sind, ist diesen Entgegenhaltungen nicht zu entnehmen.

Die Aufgabe der Erfindung liegt darin, bei einem Verfahren der eingangs genannten Art, bei welchem die Abwasserbelastung durch das Zusatzmittel entfällt, mit einfachen Mitteln für gleichmässigen, verlustfreien Auftrag des Zusatzmittels zu sorgen.

Diese Aufgabe wird durch die kennzeichnenden Merkmale des Anspruchs 1 gelöst.

Durch das erfindungsgemässe Aufrollen des Zusatzmittels erhält man einen äusserst gleichmässigen Auftrag über die gesamte Bahnbreite. Es können Zusatzmittel in einem weiten Viskositätsbereich eingesetzt werden. Bedarfsweise können einige Lagen, z.B. die äussersten Randlagen, von Zusatzmittel freigehalten werden, indem die Auftragswalze zwischenzeitlich von der Formatwalze abgehoben wird. Bei einem Besprühen ist dies in diesem Ausmasse nicht möglich. Sprühdämpfe bzw. Sprühnebel können nicht entstehen, so dass die Umweltbelastung gering bleibt und auch eine 100%ige Zusatzmittel-Ausnutzung gegeben ist. Die Druckausübung führt zu einer besseren Verteilung des Zusatzmittels in der Faserbahn aufgrund des entstehenden Walk-Effektes. Obwohl die Faserbahnabschnitte auf der Formatwalze noch keinesfalls zusammenhängende Bahnen bilden, so dass an sich eine Beschädigung der Oberfläche der Faserbahnabschnitte durch die andrückende Auftragswalze und u.U. auch ein Hängenbleiben loser Fasern an der Auftragswalze hätte angenommen werden können, hat sich doch der Zusammenhalt der an der Formatwalze bereits in Trocknung befindlichen Fasern als so stabil herausgestellt, dass ein einwandfreier Verfahrensablauf sichergestellt ist.

Aufgrund des Wegfalls der Abwasserbelastung ist die Wahl der Zusatzmittel nicht mehr beschränkt. Auch muss nunmehr das Zusatzmittel nicht mehr mit der Aufschwemmflüssigkeit verträglich sein. Es können demnach lösungsmittelfreie Zusatzmittel oder auch in Lösungsmittel gelöste Zusatzmittel eingesetzt werden. Die Kosten für das Zusatzmittel schlagen nicht mehr so stark ins Gewicht aufgrund der 100%igen Ausnutzung.

Als Zusatzmittel kommen Harze, Kleber, Leime, Duroplaste, Thermoplaste oder Duromere bzw. Mischungen dieser Stoffe in Frage. Besonders bevorzugt ist die Verwendung von Phenolharzen, Polyesterharzen, Bitumen oder Latex. Melaminharze, Harnstoff-Harze oder Harzleim können mit Vorteil eingesetzt werden sowie PVC- oder PU-Komponenten, die im anschliessenden Trocknungsprozess zur Reaktion kommen oder in einem darauffolgenden Verarbeitungsschritt, z.B. zu Innenausstattungsteilen von Automobilen.

Um eine schnelle und intensive Durchtränkung der Faserbahn zu erreichen, wird bevorzugt ein Vernetzungsmittel eingesetzt. Zur Einstellung einer gewünschten Steifigkeit des Mehrlagen-Fasermaterials wird vorgeschlagen, dem Zusatzmittel einen Weichmacher zuzusetzen, vorzugsweise ein synthetisches Wachs (Polyglykole, insbesondere bei Phenolharz).

Man erhält ein Mehrlagen-Fasermaterial mit verbesserten Isoliereigenschaften bei geringem Raumgewicht und relativ hoher mechanischer Stabilität, wenn man ein auschäumbares Zusatzmittel einsetzt. Auf diese Weise lässt sich eine sandwichartige Materialstruktur erhalten mit sich einander abwechselnden Schaumstoffschichten und Faserschichten.

Anstelle oder zusätzlich zu den bei der Pappenherstellung eingesetzten Zellstoffasern, vorzugsweise Altpapierfasern, können auch Holzfasern und/oder textile Fasern und/oder anorganische Fasern und/oder Kunststoffasern eingesetzt werden. Besonders bevorzugt sind Glasfasern, Mineralfasern und Pulpexfasern (Polyäthylen- bzw. Polypropylen-Fasern).

Die Erfindung betrifft auch eine Vorrichtung zur Durchführung des vorstehend angegebenen Verfahrens mit einer Formatwalze zum Aufwickeln der Faserbahn. Um mit baulich einfachen Mitteln eine zuverlässige Übertragung des Zusatzmittels auf die Faserbahn sicherzustellen, wird eine an der Formatwalze Auftragswalze zum Übertragen des Zusatzmittels auf die Faserbahn auf der Formatwalze vorgeschlagen.

Das flüssige Zusatzmittel (mit oder ohne Lösungsmittel) kann gegebenenfalls unmittelbar auf die Auftragswalze aufgetragen, zum Beispiel aufgesprüht, werden. Besonders bevorzugt aufgrund des geringen baulichen Aufwandes ist jedoch der Einsatz einer in ein Zusatzmittel-Bad eintauchenden Aufnahmewalze, welche an der Auftragswalze unter Übertragung des Zusatzmittels abrollt.

Um mit einfachen Mitteln ein Wegschwenken der Auftragswalze von der Formatwalze ohne Unterbrechung des Kontakts mit der Aufnahmewalze durchführen zu können, wird vorgeschlagen, die Auftragswalze beweglich zu lagern, vorzugsweise schwenkbar um die Aufnahmewalzenachse. Durch entsprechende Steuerung kann die Auftragswalze entsprechend der Dickenzunahme der Formatwalze während des Aufwickelns zurückgeschwenkt werden. Auch ist es möglich, lediglich einen Teil der Aufwickellagen mit dem Zusatzmittel zu versehen, beispielsweise sämtliche Lagen, bis auf die beiden äusseren Lagen, um die beiden Pappenseiten von Zusatzmittel freizuhalten.

Die Erfindung betrifft ferner ein Mehrlagen-Fasermaterial, bestehend aus mehreren Faserbahnen mit auf die Faserbahnen aufgetragenem Zusatzmittel, insbesondere Harz. Bevorzugt ist die Verwendung eines derartigen Mehrlagen-Fasermaterials als flächiges Kraftfahrzeug-Innenteil, insbesondere Innenverkleidungsteil, Hutablage oder dergleichen.

Die Erfindung wird im folgenden an einem bevorzugten Ausführungsbeispiel anhand der Zeichnung erläutert.

Es zeigt:

Fig. 1 eine Schemaansicht auf den erfindungsgemäss ausgebildeten Bereich der Formatwalze einer Pappenherstellungsvorrichtung;

Fig. 2 eine Draufsicht auf eine erfindungsgemäss hergestellte Hutablage, und

Fig. 3 den Teilschnitt nach Linie III-III in Fig. 2.

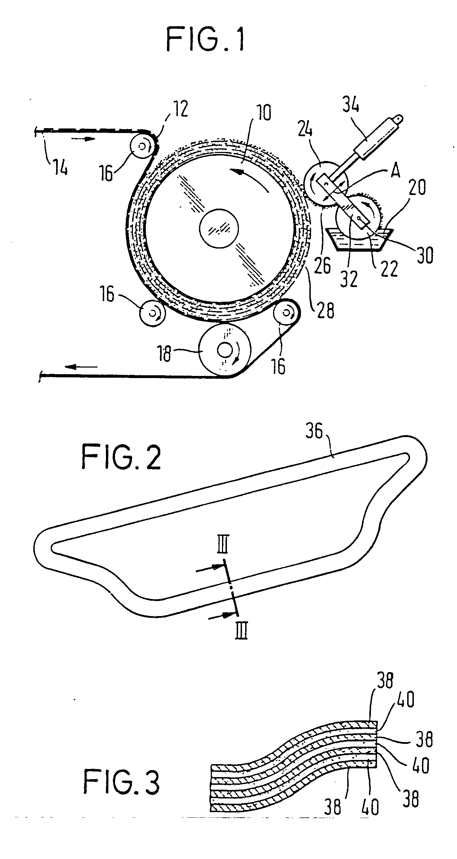

Die in Fig. 1 erkennbare Formatwalze 10 wickelt eine strichliert gezeichnete Faserbahn 12 auf, die ihr von einer endlosen Filzbahn 14 zugeliefert wird. Die Filzbahn 14 ist über mehrere kleine und eine grosse Ablenkwalze 16 bzw. 18 geführt und wird von diesen Walzen gegen den Aussenumfang der Formatwalze 10 gedrückt, die die dazwischenliegende Faserbahn 12 übernimmt. Die Bewegungsrichtungen sämtlicher Walzen sowie der Faserbahn 12 und der Filzbahn 14 sind in Fig. 1 mit Pfeilen angegeben.

Die der Format- oder Aufwickelwalze 10 vorangehenden, nicht dargestellten Teile der Pappenherstellungsvorrichtung haben herkömmlichen Aufbau. Eine oder mehrere Siebwalzen rotieren jeweils in einer Faseraufschwemmung und übertragen die an ihrer Aussenseite nach dem Verlassen des Flüssigkeitsspiegels anhaftenden Faserteilchen auf die Filzbahn 14, die sie wiederum als Faserbahn 12 der Aufwickelrolle 10 zuführt. Die Faseraufschwemmung besteht aus in Wasser verteilten Fasern, insbesondere Zellulosefasern (zum Beispiel Altpapierfasern). Im Gegensatz zu den herkömmlichen Pappeherstellungsvorrichtungen ist der Faseraufschwemmung jedoch kein Zusatzmittel, insbesondere Harz, zugegeben. Diese Zugabe erfolgt mit Fig. 1 erst an der Formatwalze. In ein Lösungsmittelbad 20 taucht eine Aufnahmewalze 22, an welcher eine Auftragswalze 24 abrollt. Der am Aussenumfang der Aufnahmewalze 22 anhaftende Zusatzmittelfilm 26 wird von der Aufnahmewalze 24 übernommen und an den eben erst auf die Formatwalze 10 gewickelten Abschnitt 28 der (endlosen) Faserbahn 22 drückt. Das relativ dünnflüssige Zusatzmittel benetzt den Abschnitt 28, wobei es entsprechend dem Dickenverhältnis von Faserbahn 12 und Zusatzmittelfilm 24 und der Viskosität des Zusatzmittels zu einer mehr oder weniger starken Durchtränkung des Abschnitts 28 im Kontaktbereich mit der Walze 24 kommt. Durch entsprechende Verfahrensführung ist es auch möglich, bedarfsweise lediglich eine teilweise Durchtränkung oder gar eine Benetzung lediglich der Faserbahnaussenseite zu erhalten.

Als Zusatzmittel kommen Stoffe in Frage, welche den Zusammenhalt zwischen den Fasern verbessern. Es kommen Einkomponenten-Harze und Zweikomponenten-Harze in Frage. Es kommen Kleber ohne Lösungsmittel (zum Beispiel heiss aufgebrachte Thermoplaste) in Frage oder Klebstoffe mit organischem Lösungsmittel oder auch in wässeriger Lösung (zum Beispiel Leime auf Stärkebasis).

Es können natürliche oder synthetische Thermoplaste und Duroplaste eingesetzt werden. Besonders geeignet sind Bitumenstoffe, Latexstoffe, Polyalkylene, Polyätherstoffe, Polyesterstoffe, Polyamide, Polyepoxide, Formaldehydharze, Phenolharze, wie zum Beispiel Phenolformaldehydharze, Melaminharze und Harnstoffharze. Es können Weichmacher eingesetzt werden, wie zum Beispiel Polyterephthalat oder Wachse aber auch PVC- oder PU-Komponenten, die in einem späteren Verfahrensschritt, insbesondere bei der Trocknung, reagieren.

Die Verteilung des Zusatzmittels im Abschnitt 28 kann durch Andrücken der Auftragswalze 24 an die Formatwalze 10 unterstützt werden und/oder durch Erwärmung in diesem Bereich. Um die Auftragswalze 24 an die Formatwalze 10 andrücken zu können, ist die Auftragswalze 24 um die Achse 30 der Aufnahmewalze 22 schwenkbar gelagert, was ducrh einen Schwenkhebel 32 in Fig. 1 angedeutet ist. Eine an den Schwenkhebel 32 angreifende Kolben-Zylinder-Anordnung 34 erlaubt ein Verschwenken der Auftragswalze 24 um die stationäre Achse 30 (Bewegungsdoppelpfeil A).

Durch entsprechende Steuerung der Kolben-Zylinder-Einheit 34 ist es möglich, wahlweise entweder sämtliche Lagen der aufgewickelten Faserbahn 12 jeweils aussenseitig mit dem Zusatzmittel zu versehen oder lediglich einen Teil davon, zum Beispiel sämtliche Lagen ausser den beiden Aussenlagen. Auch kann nach Beendigung des Aufwickelvorgangs die Auftragswalze 24 bedarfsweise weggeschwenkt werden. Es erfolgt dann die Auftrennung des zum Beispiel 20 Faserbahnlagen umfassenden Wickels auf der Formatwalze 10 (Schnitt entlang einer Mantellinie der Formatwalze 10). Das rechteckige Mehrfachlagen-Fasermaterialstück wird von der Formatwalze 10 abgenommen und den nächsten Verarbeitungsstufen zugeführt, insbesondere der Trocknungsstufe.

Aus dem gewonnenen Material lässt sich zum Beispiel eine in Fig. 2 angedeutete Hutablage 36 zum Einbau in ein Kraftfahrzeug herausschneiden und in die gewünschte Form heisspressen. Im Detailschnitt der Fig. 3 sind in symbolischer Darstellung die einzelnen Faserbahnlagen mit 38 bezeichnet und die dazwischen liegenden Zusatzmittelschichten mit 40. Je nach der gewählten

Verfahrensdurchführung sind die Schichten 40 mehr oder minder stark ausgeprägt; bei völliger Durchtränkung der Faserlagen 38 sind gegebenenfalls die Schichten 40 praktisch vernachlässigbar.

Anstelle oder zusätzlich zu den insbesondere aus Altpapier gewonnenen Zellstoffasern können auch andere organische oder anorganische Fasern eingesetzt werden, wie zum Beispiel Glasfasern, Mineralfasern oder Kunststofffasern (Pulpex-Fasern) oder auch Holzfasern oder textile Fasern.

Als Zusatzmittel kann auch ein ausschäumendes Zusatzmittel eingesetzt werden, so dass man dementsprechend ein Mehrlagen-Fasermaterial mit Schaum-Zwischenschichten erhält. Ein derartiges Material kann zum Beispiel als Wellkarton-Ersatz eingesetzt werden.

Bei der Durchführung des vorstehend beschriebenen Verfahrens entfällt jegliche Abwasserbelastung durch das Zusatzmittel, da die Faser-Aufschwemmung zusatzmittelfrei ist. Es erfolgt eine praktisch 100%ige Ausnutzung des Zusatzmittels. Die Filzbahn 14 erreicht höhere Standzeiten, da sie nicht durch das Zusatzmittel verklebt wird. Durch entsprechende Verfahrensführung lässt sich eine innige Vernetzung des Fasermaterials mit dem Zusatzmittel erreichen. Durch Zugabe von Zusatzmitteln, auch zum Beispiel in Form einer folienartigen Zusatzmittelzuführung, lässt sich auch ein sandwichähnlicher Aufbau des Mehrlagen-Fasermaterials erreichen mit entsprechend starken Zwischenschichten aus Zusatzmitteln. Gegebenenfalls kann ein ausschäumendes Zusatzmittel Verwendung finden.

## Patentansprüche

1. Verfahren zur Herstellung von Wickelpappe, wobei man die Fasern einer Faser-Aufschwemmung unter Bildung einer lose zusammenhängenden Faserbahn entnimmt und die Faserbahn auf einer Formatwalze zu einer Wickelpappenbahn aufwickelt, wobei man den Fasern ein Zusatzmittel zugibt, welches für den Zusammenhalt der Fasern der fertiggestellten Wickelpappenbahn sorgt, und wobei man das Zusatzmittel während des Aufwickelns auf den zuletzt gewickelten Faserbahnabschnitt aufbringt, dadurch gekennzeichnet, dass man das Zusatzmittel auf die Faserbahnabschnitte mittels einer an der Formatwalze abrollenden Auftragswalze unter Druckausübung aufrollt.

2. Verfahren nach Anspruch 1, dadurch gekennzeichnet, dass man das Zusatzmittel lösungsmittelfrei auf die Faserbahnabschnitte aufbringt.

3. Verfahren nach Anspruch 1, dadurch gekennzeichnet, dass man das Zusatzmittel in Lösung auf die Faserbahn aufbringt.

4. Verfahren nach einem der vorhergehenden Ansprüche, dadurch gekennzeichnet, dass als Zusatzmittel ein Einkomponenten- oder Zweikomponentenharz verwendet wird.

5. Verfahren nach einem der vorhergehenden Ansprüche, dadurch gekennzeichnet, dass als Zusatzmittel natürliche oder synthetische Thermoplaste, Duroplaste oder Elastomere verwendet werden.

6. Verfahren nach Anspruch 5, dadurch gekennzeichnet, dass Bitumenstoffe, Latexstoffe, Polyalkylene, Polyätherstoffe, Polyesterstoffe, Polyamide, Polyepoxide, PVC-Komponenten oder PU-Komponenten verwendet werden.

7. Verfahren nach Anspruch 5, dadurch gekennzeichnet, dass als Zusatzmittel Formaldehydharze, Phenolharze, vorzugsweise Phenolformaldehydharze, Melaminharze oder Harnstoffharze verwendet werden.

8. Verfahren nach einem der Ansprüche 5 bis 7, dadurch gekennzeichnet, dass ein Benetzungsmittel verwendet wird.

9. Verfahren nach einem der vorhergehenden Ansprüche, dadurch gekennzeichnet, dass ein ausschäumbares Zusatzmittel verwendet wird.

10. Verfahren nach einem der vorhergehenden Ansprüche, dadurch gekennzeichnet, dass Zellstoffasern, vorzugsweise Altpapierfasern und/oder anorganische Fasern und/oder Kunststofffasern und/oder textile Fasern und/oder Holzfasern verwendet werden.

11. Verfahren nach Anspruch 10, dadurch gekennzeichnet, dass Glasfasern und/oder Mineralfasern und/oder Pulpexfasern verwendet werden.

12. Vorrichtung zur Durchführung des Verfahrens nach einem der vorhergehenden Ansprüche, mit einer Formatwalze (10) zum Aufwickeln der Faserbahn (12), gekennzeichnet durch eine an der Formatwalze (10) angeordnete Auftragswalze (24) zum Übertragen von Zusatzmitteln auf die Faserbahn (12) auf der Formatwalze (10).

13. Vorrichtung nach Anspruch 12, gekennzeichnet durch eine in ein Zusatzmittelbad (20) eintauchende Aufnahmewalze (22), welche an der Auftragswalze (24) unter Übertragung des Zusatzmittels abrollt.

14. Vorrichtung nach Anspruch 13, dadurch gekennzeichnet, dass die Auftragswalze (24) beweglich gelagert ist, vorzugsweise schwenkbar um die Aufnahmewalzenachse (30).

## Claims

1. A method of producing millboard, the fibres being extracted from a fibre suspension to form a loosely cohesive fibre web, the fibre web being wound onto a format roller to produce a web of millboard, an additive being incorporated in the fibres to provide for cohesion of the fibres in the finished web of millboard, the additive being applied to the last wound portion of fibre web during the winding process, characterised in that the additive is rolled onto the portions of fibre web by means of an applicator roller which rolls over the format roller and exerts pressure.

2. A method according to Claim 1, characterised in that the additive is applied to the portions of fibre web while free from solvent.

3. A method according to Claim 1, characterised in that the additive is applied to the fibre web in solution.

4. A method according to one of the preceding Claims, characterised in that a single component or twin-component resin is used as the additive.

5. A method according to one of the preceding Claims, characterised in that natural or synthetic thermoplasts, duroplasts or elastomers are used as the additive.

6. A method according to Claim 5, characterised in that bitumous substances, polyalkylenes, polyether substances, polyester substances, polyamides, polyepoxides, PVC components or PU components are used.

7. A method according to Claim 5, characterised in that formaldehyde resins, phenol resins, preferably phenol formaldehyde resins, melamine resins or urea resins are used as additives.

8. A method according to one of Claims 5 to 7, characterised in that a cross-linking agent is used.

9. A method according to one of the preceding Claims, characterised in that an additive is used which is adapted to be foamed.

10. A method according to one of the preceding Claims, characterised in that cellulose fibres, preferably old paper fibres and/or inorganic fibres and/or synthetic plastics fibres and/or textile fibres and/or wood fibres are used.

11. A method according to Claim 10, characterised in that glass fibres and/or mineral fibres and/or pulpex fibres are used.

12. An apparatus for carrying out the method according to one of the preceding Claims, with a format roller (10) for winding up the fibre web (12), characterised by, disposed on the format roller (10), an applicator roller (24) for transferring additives to the fibre web (12) on the format roller (10).

13. An apparatus according to Claim 12, characterised by, plunging into a bath (20) of additive, a receiving roller (22) which rolls onto the applicator roller (24) to transfer additive to it.

14. An apparatus according to Claim 13, characterised in that the applicator roller (24) is movably mounted being preferably mounted to pivot about the axis (30) of the receiving roller.

## Revendications

1. Procédé pour la fabrication de carton enroulé, selon lequel on prélève les fibres d'une suspension fibreuse en formant une bande de fibres rassemblées de manière lâche et on enroule la bande de fibres sur un cylindre de formatage en une bande de carton enroulé, selon lequel on adjoint aux fibres un additif qui assure la cohérence des fibres de la bande de carton enroulé obtenue, et selon lequel on applique l'additif au cours de l'enroulement sur le tronçon de la bande de fibres qui vient d'être enroulé, caractérisé en ce que l'on dépose l'additif sur les tronçons de bande de fibres au moyen d'un cylindre applicateur roulant contre le cylindre de formatage, tout en exerçant une pression.

2. Procédé selon la revendication 1, caractérisé en ce que l'additif est appliqué exempt de solvant sur les tronçons de bande de fibres.

3. Procédé selon la revendication 1, caractérisé en ce que l'on applique l'additif en solution sur la bande de fibres.

4. Procédé selon l'une des revendications précédentes, caractérisé en ce que l'on utilise comme additif une résine à une ou à deux composantes.

5. Procédé selon l'une des revendications précédentes, caractérisé en ce que l'on utilise comme additif des plastiques thermodurcissables, des duromères ou des élastomères, naturels ou synthétiques.

6. Procédé selon la revendication 5, caractérisé en ce que l'on utilise des matières bitumineuses, des latex, des polyalkylènes, des polyéthers, des polyesters, des polyamides, des polyépoxydes, des composants PVC ou des composants polyuréthanne.

7. Procédé selon la revendication 5, caractérisé en ce que l'on utilise comme additif des résines formaldéhyde, des résines phénoliques, de préférence des résines phénol-formol, des résines de mélamine ou des résines d'urée.

8. Procédé selon l'une des revendications 5 à 7, caractérisé en ce que l'on utilise un agent mouillant.

9. Procédé selon l'une des revendications précédentes, caractérisé en ce que l'on utilise un additif moussant.

10. Procédé selon l'une des revendications précédentes, caractérisé en ce que l'on utilise des fibres cellulosiques, de préférence des fibres de vieux papiers et/ou des fibres anorganiques et/ou des fibres de matière plastique et/ou des fibres textiles et/ou des fibres de bois.

11. Procédé selon la revendication 10, caractérisé en ce que l'on utilise des fibres de verre et/ou des fibres minérales et/ou des fibres pulpex.

12. Dispositif pour la mise en œuvre du procédé selon l'une des revendications précédentes, avec un cylindre de formatage (10) pour enrouler la bande de fibres (12), caractérisé par un cylindre applicateur (24) disposé contre le cylindre de formatage (10) afin de transférer des additifs sur la bande de fibres (12) se trouvant sur le cylindre de formatage (10).

13. Dispositif selon la revendication 12, caractérisé par un cylindre receveur (22) plongeant dans un bain d'additif (20), cylindre qui roule contre le cylindre applicateur (24) en transférant l'additif.

14. Dispositif selon la revendication 13, caractérisé en ce que le cylindre applicateur (24) est monté mobile, de préférence pivotant autour de l'axe (30) du cylindre receveur.

# FIG.1

# FIG.2

# FIG.3